**Europäisches Patentamt**

**European Patent Office**

**Office européen des brevets**

(11) Publication number: **0 101 068**
**B1**

# (12) EUROPEAN PATENT SPECIFICATION

(45) Date of publication of patent specification: **12.04.89**

(51) Int. Cl.⁴: **C 09 K 5/00**

(21) Application number: **83107907.4**

(22) Date of filing: **10.08.83**

(54) Process for the preparation of hydrogel and its use as a cooling medium.

(30) Priority: **13.08.82 JP 139705/82**
**02.11.82 JP 193099/82**
**04.11.82 JP 192552/82**

(73) Proprietor: **NIPPON OIL CO. LTD.**
**3-12, Nishi Shimbashi 1-chome**
**Minato-ku Tokyo (JP)**

(43) Date of publication of application:
**22.02.84 Bulletin 84/08**

(72) Inventor: **Nambu, Masao**
**447-17, Honmoku Motomachi Naka-ku**
**Yokohama-shi Kanagawa-ken (JP)**
Inventor: **Kinoshita, Tatsuo**
**160-3, Takada**
**Chigasaki-shi Kanagawa-ken (JP)**

(45) Publication of the grant of the patent:
**12.04.89 Bulletin 89/15**

(84) Designated Contracting States:
**CH DE FR GB IT LI**

(74) Representative: **Schübel-Hopf, Ursula et al**
**Strehl Schübel-Hopf Groening Schulz**
**Patentanwälte Maximilianstrasse 54 Postfach 22 14 55**
**D-8000 München 22 (DE)**

(56) References cited:
**CA-A- 870 048**
**FR-A-2 107 711**
**PATENTS ABSTRACTS OF JAPAN, vol. 7, no. 118 (C-167)1263r, 21st May 1983; & JP - A - 58 37 076 (NIPPON SEKIYU K.K.) 04-03-1983**
**PATENTS ABSTRACTS OF JAPAN, vol. 7, no. 43 (C-152)1188r, 19th February 1983; & JP - A - 57 195 178 (NIPPON SEKIYU K.K.) 30-11-1982**

Courier Press, Leamington Spa, England.

## Description

The present invention relates to a process for the preparation of a hydrogel, and more particularly to a process for the preparation of a hydrogel having properties superior to those of the conventional hydrogels from a polyvinyl alcohol.

A variety of gel compositions have hitherto been proposed to be used as cooling media and some of them are applied for practical uses. Such a gel is referred to as a cooling gel, chilling gel, coldness-keeping gel, coldness-keeping heat transfer medium, colloidal coolant, coldness-keeping means, coolant composition or Ice-non (Trade Name), i.e. ice pillow. However, these known coolant gels are not satisfactory in properties or involve troublesome or difficult steps of preparation, as will be summarized below.

(1) The easiest and best-known process for the prepartion of a water-containing coolant gel is the preparation of agar gel. This process comprises the step of dissolving agar in boiling water or hot water of 80° to 94°C to obtain a solution containing not less than 0.1 wt%, for example 1 to 10 wt% of agar and the step of allowing the solution to be cooled to the room temperature, whereby a water-containing gel (hydrogel) having a water content of about 90 to 99 wt% is easily prepared. However, when the thus prepared agar gel is used as a substitute material for ice containing an ice pillow or an ice bag after being cooled in an ice box of· a refrigerator, the agar gel is poor in elasticity and too crumbly to provide a user with a comfortable touch or feeling but gives strange and uncomfortable feeling with the additional disadvantage of collapse. A further disadvantage of the agar gel is that it is often frozen to form a rigid mass in a cooling box of a refrigerator, the rigid mass being objectionable to be used as a substituent for the ice bag. Although the freezing temperature of agar may be lowered by immersing agar in an antifreezing solution, such as ethylene glycol or propylene glycol, or by cooling a hot aqueous solution containing both agar and an antifreezing solution, the thus obtained gel is also crumbly and weak to be improper for use as a coldness-keeping gel in an ice pillow or the like.

(2) It has been already well-known that gelation occurs instantaneously when boric acid (or an aqueous solution of boric acid) or borax (or an aqueous solution of borax) is added to an aqueous solution of polyvinyl alcohol. However, the gel thus obtained is so soft and weak that it is readily torn to pieces only by pinching by fingers. Another disadvantage of this gel is the syneresis phenomenon, i.e. separation of contained water, during repeated uses (see Japanese Patent Publication No. 11210/1970).

In order to avoid hardening of a gel of polyvinyl alcohol-borax system due to congeal of water content in the gel when the gel is cooled in an ice-box or a cooling box or refrigerator, a method has been proposed in which an aqueous solution of polyvinyl alcohol is added with any of monohydric alcohols, polyhydric alcohols, glucose or sucrose followed by the addition of borax to be gelatinized. However, a gel prepared in accordance with this proposal becomes weaker with the additional disadvantage that syneresis appears during the repeated uses (see Japanese Patent Publication No. 19602/1971).

An alternate method for lowering the freezing point of the polyvinyl alcohol-borax system gel has been conceived, wherein the gel is immersed in an antifreezing solution, such as ethylene glycol or propylene glycol. However, the gel becomes too soft by the inclusion of ethylene glycol or propylene glycol to retain the shape. The polyvinyl alcohol-borax system gel has a disadvantage that it is apt to collapse by the action of other antifreezing solutions, such as methanol, ethanol and acetone.

After making researches for the development of a water-insoluble gel which is excellent in mechanical properties and hardly frozen in an ice box of a refrigerator by the use of polyvinyl alcohol in a low cost and in a stable condition, we have developed a process for the preparation of a hydrogel by cooling to solidify polyvinyl alcohol followed by dehydrating the solidified mass in vacuum and filed a pending Patent Application, U.S. Serial No. 344,006, on January 29, 1982. We have filed another Patent Application, U.S. Serial No. 400,821 filed on July 22, 1982, relating to a process for the preparation of a gel for use as a cooling medium, the process being developed based on the finding that a solid gel which is highly elastic, excellent in softness and hardly to be frozen can be prepared by cooling to solidify an aqueous solution or an aqueous suspension containing a polyvinyl alcohol and a water--soluble polyhydric alcohol followed by dehydrating the solidified mass in vacuum. Based on the same finding, we have developed a gel for cooling a patient's head for preventing alopecia due to a harmful side effect of a carcinostatic substance, and filed another Patent Application which is now pending as Japanese Patent Appln. No. 77502/ 1982.

The process for the preparation of a gel for use as a cooling medium, provided by our former-made proposals, comprises the steps of cooling to solidify an aqueous solution containing 2.5 to 10 wt% of a polyvinyl alcohol having a degree of hydrolysis of not less than 95 mol% and an average polymerization degree of not less than 1500 and 20 to 80 wt% of a water-soluble polyhydric alcohol having 2 to 6 hydroxyl groups to a temperature of not higher than — (minus) 6°C, and thereafter dehydrating the solidified mass in vacuum until the percentage dehydration rate (i.e. the weight reduction rate of the cooled and solidified mass) reaches a value within the range of not less than 5 wt% and not more than 95 wt%.

According to our former-made proposals, an aqueous solution or an aqueous dispersion containing the polyvinyl alcohol and the water-soluble polyhydric alcohol, as described above, is submitted to prepare a gel which is excellent in elasticity and softness and is hardly frozen even when cooled in an ice box of a refrigerator.

This gel made known to the art by our preceding patent applications is clearly distinguishable from a conventional gel prepared by cooling an aqueous solution of polyvinyl alcohol, in that the former-mentioned gel is insoluble in water and warm water and free from stickiness. The gel proposed by our preceding patent applications was a novel gel which was quite different from the gel prepared by the spontaneous cooling of an aqueous solution of conventional polyvinyl alcohol and also quite different from the known gel prepared through chemical treatments of conventional aqueous solution of polyvinyl alcohol.

The gel made known to the art by our preceding patient applications has a touch resembling living tissue in itself, and thus may be used as a substitute for an ice pillow or an ice bag to give a cooling medium having high elasticity. Furthermore, it is free from stickiness and is highly resilient and elastic to make it possible to mold it to have a shape of helmet which may be snugly put on a patient's head without the need of charging or enclosing it in a pouch made of a polyvinylchloride or like material for the purpose of preventing alopecia due to a harmful side effect of a carcinostatic substance.

We have investigated further on the process of the preparation of such a hydrogel, and found that hydrogel prepared from a polyvinyl alcohol having an average molecular weight of not less than 800 and less than 1500 may be used for the same purpose to accomplish this invention.

A primary object of this invention is to provide a process for the preparation of a hydrogel which is strong and highly elastic, free from unpleasant odor, and resists to disintegration and provides a comfortable touch.

Another object of this invention is to provide a process for the preparation of a hydrogel having excellent insolubility in water.

A further object of this invention is to provide a process for the preparation of an inexpensive and yet stable hydrogel so that the gel structure is not disintegrated or broken even by the attack of a freezing point depressing agent, such as ethylene glycol.

A further ohject of this invention is to provide a process for the preparation of a hydrogel of high water content for use as a cooling medium.

A still further object of this invention is to provide a process for the preparation of a hydrogel which resists freezing even when it is placed in an ice-box of a cooling box or freezing box.

Additional object of this invention is to provide a process for the preparation of a hydrogel which may be molded to have desired shape and dimensions and immediately used as a final product without the need of shaping operation, or may be molded into a block and then shaped, for example by cutting, to have desired shape and dimensions.

The above and other objects of this invention will become apparent from the following description of the invention.

The process for the preparation of a hydrogel, according to this invention, comprises the steps of solifidying an aquoeus solution containing 2.5 to 25 wt% of a polyvinyl alcohol having a degree of hydrolysis of not less than 95 mol% and an average polymerization degree of not less than 800 and less than 1500 and 1 to 80 wt% of a water-soluble polyhydric alcohol having 2 to 6 hydroxyl groups by cooling said aqueous solution to a temperature of not higher than − (minus) 3°C, and then dehydrating in vacuum the solidified mass until the percent dehydration rate reaches 5 to 95 wt%.

The present invention will now be described in detail hereinbelow.

The polyvinyl alcohol used in the present invention, which usually is obtained by alkaline hydrolysis of polyvinyl esters, especially polyvinyl acetate, should have a degree of hydrolysis of not less than 95 mol%, preferably not less tha 97 mol%, and more preferably not less than 98 mol%.

The polyvinyl alcohol used in the present invention should have an average polymerization degree of not less than 800 and less than 1500. The commercially available polyvinyl alcohol products having average polymerization degrees of 1,400, 1,100 and 1,000 may be used without any further treatment.

In the first step of the process of the invention, an aqueous solution containing a polyvinyl alcohol and a water-soluble polyhydric alcohol is prepared. The concentration of the polyvinyl alcohol ranges from 2.5 to 25 wt%, preferably from 8 to 25 wt%, more preferably 15 to 25 wt%. Below 2.5 wt%, the hydrogel becomes too crumbly, whereas above 25 wt% the hydrogel becomes too hardened.

According to the present invention, a water-soluble polyhydric alcohol other than polyvinyl alcohol is added to the aforementioned aqueous solution of polyvinyl alcohol prior to the formation of a gel. The thus added water-soluble polyhydric alcohol acts as a freezing point depression agent, and serves to prevent the hydrogel prepared through the process of the invention from being readily and rapidly frozen to form a rigid or hard mass when it is allowed to stand in an ice box of a household refrigerator.

The water-soluble polyhydric alcohols each having 2 to 6 hydroxy groups, which may be used in the present invention, include polyhydric alcohols having 2 to 6 carbon atoms. Ethylene glycol is an example of the polyhydric alcohols used as the freezing point depression agent in the present invention. The freezing point of pure ethylene glycol is − (minus) 16°C, and the freezing points of a 10 wt% and a 19 wt% aqueous solution thereof are, respectively, to − (minus) 3°C and − (minus) 8°C. Not only the ethylene glycol, but also water-soluble polyhydric alcohols exert the freezing point depression

3

effect in an aqueous solution to depress the freezing temperature of the gel to a temperature of lower than 0°C, the examples of such polyhydric alcohols being 1, 2-propylene glycol which is commonly referred to simply as propylene glycol (−3°C at a 10 wt% substitution), 1,3-propylene glycol (−3°C at a 10 wt% substitution), glycerin (−1°C at a 10 wt% substitution) and 2-methyl-2,4-pentandiol (−2°C at a 10 wt% substitution).

The freezing points of 0.8 to 1.8 wt% aqueous solutions of glucose range within −0.1 to −0.2°C, and the freezing points of 0.1 to 1 wt% aqueous solutions of sucrose range within −0.01 to −0.06°C. The freezing point of an aqueous solution may be depressed by the addition of a relatively small quantity of a polyhydric alcohol to some extent, and the amount of polyhydric alcohol used in the hydrogel according to this invention may be selected within a range of from 1 to 80 wt%, preferably from 1 to 49 wt%, in consideration of the conditions in use, particularly the storage temperature and time in the refrigerator.

A variety of water-soluble polyhydric alcohols referred to above is involved in the hydrogel prepared in accordance with the process of the invention, and serves to prevent the hydrogel from being air-dried or hardened. As has been described above, the water-soluble polyhydric alcohol may be added in an amount of not more than 80 wt% in consideration of the freezing point depression effect exerted by the selected polyhydric alcohol and also depending on the precooling temperature of the hydrogel. In case where the amount of the added polyhydric alcohol is small, for example the content thereof is less than 10 wt%, the hydrogel of the invention is deteriorated in prevention of air-dried state. However, in such a case, the hydrogel of the invention may be wrapped or enclosed by a film or a bag made of polyvinyl chloride or polyethylene, or may be used in a bare or exposed condition (without being wrapped or covered) for about an hour and then stored in a sealed container or a polyethylene pouch when used in a helmet shape to be put on a patient dosed with a carcinostatic substance, as will be described in detail hereinafter.

The aqueous solution containing a polyvinyl alcohol and a water-soluble polyhydric alcohol, used in the process of this invention, may be prepared by adding the polyvinyl alcohol and the water-soluble polyhydric alcohol into water to dissolve them in water, or by dissolving the polyvinyl alcohol in water to prepare a solution into which the polyhydric alcohol or an aqueous solution thereof is admixed. The method of preparing the aqueous solution containing the polyvinyl alcohol and the water-soluble polyhydric alcohol is not limited as far as the concentration of polyvinyl alcohol is adjusted within the range of from 2.5 to 25 wt% and the concentration of water-soluble polyhydric alcohol is adjusted within the range of from 1 to 80 wt%. Because of the fact that polyvinyl alcohols are scarcely soluble in solvents other than water, the polyvinyl alcohol particles are dispersed in an aqueous solution containing a water-soluble polyhydric alcohol to form transparent micro-gel particles and the solution often becomes a transparent aqueous solution. However, the formation of such a suspension does not provide any obstacle for the actual operation of the process of the invention.

In the process of the invention, the aqueous solution or aqueous suspension containing the polyvinyl alcohol and the water-soluble polyhydric alcohol is cast into a mold having a desired shape. A concentrated aqueous solution of polyvinyl alcohol, particularly an aqueous solution containing more than 10 wt% of a polyvinyl alcohol, is considerably viscous, for example, a 16 wt% aqueous solution of a polyvinyl alcohol having an average polymerization degree of 1,400 has a viscosity of about 10 Pa.s (10,000 cP) at 20°C. However, the viscosity of the solution may be decreased to 2 Pa.s (2,000 cP) by heating the solution to 60°C. Accordingly, for facilitating easy handling of a concentrated aqueous solution of polyvinyl alcohol used in the process of the invention, it is recommended to handle the aqueous solution while maintaining the temperature of the solution at a temperature above the room temperature, for example higher than 50°C, if necessary. In the process of the invention, after the aqueous solution containing the polyvinyl alcohol and the water-soluble polyhydric alcohol is cast into the mold, the molded mass is cooled to be solidified at a temperature of not higher than −3°C to form a solidified mass of desired shape.

In the cooling step, the aforementioned aqueous solution or dispersion is cooled to a temperature lower than the freezing temperature at which the frozen mass becomes white and opaque. For instance, although a 15 wt% aqueous solution of a polyvinyl alcohol having an average polymerization degree of 1,400 has a freezing point of −2°C at which it becomes white and opaque, it often occurs a supercooling state to leave the solution unfrozen and unhardened even at a temperature of −4 to −5°C in a transparent solution form. However, by allowing to stand the cooled mass of supercooling state (at −2 to −5°C) for a while, the mass may be converted to a normal frozen state (Freezing Point: −2.5°C) within a period of 30 minutes. Thr freezing temperature of an aqueous solution of a polyvinyl alcohol having a polymerization degree of 1,100 is found to be −1.5°C (−4 to −5°C under the super-cooling condition). The freezing temperature of the aqueous solution is further depressed by the coexisting polyhydric alcohol, and an aqueous solution containing 19 wt% of glycerin and 8 wt% of a polyvinyl alcohol (Average Polymerization Degree: 1,400) is depressed to −5°C (−10°C under the supercooling condition). The freezing temperature of the aqueous solution used in the process of the invention is changed depending on the polymerization degree and the concentration of the used polyvinyl alcohol, and also on the kind and the concentration of the polyhydric alcohol. Irrespective of the depression in freezing temperature, the aqueous solution used in the process of the invention should be cooled to a temperature low enough for freezing the aqueous solution containing the polyvinyl alcohol.

In the process of the present invention, the mass frozen by the preceding cooling step is then dehydrated in vacuum without thawing the mass. The mechanical properties of the resultant hydrogel are improved as the percental dehydration rate (i.e. the weight reduction rate of the cooled and solidified gel) is increased. However, the percent dehydration rate need not be increased too high as to form an excessively stronger gel, in view of ordinary applications of the gel, and ranges generally within 5 to 95 wt%, preferably 10 to 80 wt%, and more preferably within 15 to 40 wt% in order to prepare a gel of soft touch. The terminology "dehydration in vacuum" as herein used throughout the specification and claims, means that the frozen mass is dehydrated under a reduced pressure. The degree of reduced pressure applied at the dehydration step is not limited, and the dehydration may be effected under a reduced pressure of not higher than $2,66 \cdot 10^{-3}$b (2 mmHg), preferably not higher than $1,33 \cdot 10^{-3}$b (1 mmHg), more preferably not higher than $1,33 \cdot 10^{-4}$b (0.1 mmHg). The dehydration step is esssential in the process of the present invention. A highly resilient gel having high mechanical strengths cannot be formed unless the frozen mass is dehydrated through dehydration in vacuum. As the percental dehydration rate increases, the strength of a gel is increased and the properties of the gel, including the non-sticking nature and the waterproof property, are remarkably improved. In view of these advantageous improvements attained by this partial dehydration of the frozen mass, the process of the invention is indispensable with the partial dehydration step. However, in the process of the invention, the objects of the invention can be attained by partial dehydration, as aforementioned and defined in the claims, and the frozen mass need not be dehydrated or dried thoroughly otherwise necessitated for the production of a freeze-dried medicine for an injection or the production of freeze-dried foodstuffs, such as coffee, milk, fruit juices or noodles. Whereas the product gel becomes stronger as the precentage dehydration rate increases, as described above, the percentage dehydration rate may be freely selected depending on the desired strength of the gel. It should be noted again that this partial dehydration step is essential to exert a significant influence in the process of the invention to prepare a hydrogel which is not fluidic and sticky and has a high water-content and improved mechanical strengths.

The hydrogel prepared by the process of the invention has a touch resembling a living tissue by itself, and thus may be used as a cooling medium in substitution for the conventional ice pillow or ice bag to give a moistened touch and a pleasant KONNYAKU (devil's tongue jelly) like resiliency.

In addition to the applications substituting for the conventional ice pillow or ice bag, the gel prepared by the process of the invention may be used as a cooling medium for covering the head of a patient to prevent alopecia due to harmful side action of cancer chemotherapy. When the gel is used to maintain the head of a patient under cold condition during the time of dosing the patient with carcinostatics, such as Daunomycin, i.e. Daunorubicin, or Adriamycin, i.e. 14-hydroxy daunorubicin (doxorubicin), alopecia is prevented.

It has been well known in the art that Adriamycin acts as a terrible poison, although it exerts a noticeably superior curing effect for a variety of cancers and thus has been recognized as one of the important carcinostatic substances. For instance, when Adriamycin is dosed to patients at every 25 day interals, more than 90% of the patients suffer alopecia to feel mental shocks by the loss of their hairs from their heads. In addition to the mental pains suffered from the loss of hairs, this might cause more serious problem than some of them would have distrusts of the modern medicines or medical treatments if they were in lack of adequate understanding on the used carcinostatic substances.

This sudden alopecia seems to be caused by the antibiotics absorbed by the cellular tissues of the hairs, and it has been tried to cool the cells of the hairs to a temperature at which the metabolism of the living cellular tissues is considerably lowered, for example to about 25°C, thereby to suppress the absorption speed of the antibiotics by the cellular tissues. In view of the fact that the dosed antibiotics reach the head of a patient after about a few minutes from the dosage and leave therefrom after about 30 to 40 minutes so that no appreciable presence of the antibiotics is found in the blood stream in the head after then, specific means for cooling the head of a patient for about 40 minutes from the dosage of the carcinostatic substance have been searched for. The preceding trials include the method in which an ice bag is wound around the head, the method using a helmet made of a sponge containing a large quantity of cold water, and the method in which a jelly, agar of a polyvinyl alcohol-borax system gel is enclosed in a hollow portion of a cap molded from a polyvinyl chloride pouch. However, the method using the ice-bag is inconvenient in that water and ice contained in the bag flow downwards in the wound bag to be dislocated unevenly to make it difficult to cool the entire head portion uniformly. The helmet made of a sponge is inferior in water-retention capacity, resulting in that a large quantity of cold water is oozed out and dropped from the sponge. For this reason, this method is not practical, as well. In the method of using a cap molded from a bag of polyvinyl chloride and having inner cavities in which a high water content gel is filled as the cooling medium, it is difficult to hold the original shape of the cap or helmet, because the conventionally-known high water content hydrogels are either fluidal, for example, a polvinyl alcohol-borax system gel and carboxymethyl cellulose gel, or soft and crumbly solids, for example, gels made of agar, jelly, carrageenan and alginic acid. A further disadvantage of the known gels is that they are poor in elasticity not to fit intimately over the head of the user.

Many proposals have been made to prevent the cooling medium from deformation or uneven dislocation, including a method of sawing the helmet over the whole area in the longitudinal and transverse direction to form a number of partitioned regions, thereby to prevent the fillers contained in separate regions from moving, and a method of providing a number of closed chambers or small cellular cavities into which cooling medium is filled. However, a gap or space is left between the head and the helmet, since the helmet *per se* lacks elasticity required for intimate contact.

As an alternate measure for the prevention of alopecia caused by the harmful side effect of Adriamycin, it has been proposed to clamp the skin of the head using a rubber band during the dosage of the antibiotics. However, this measure is not recommendable, because the patient suffers a hard pain by the clamping pressure applied around his head.

The disadvantages of the conventional methods for cooling the head of the patient are induced by a failure of the provision of a cooling medium having adequate properties, namely the disadvantages of such methods may be overcome by the provision of a hydrogel having high water content and provided with a rubber-like resiliency or elasticity and a mechanical strength high enough for retaining the shape of the molded helmet.

In accordance with another aspect of this invention, the aforementioned aqueous solution or suspension containing the defined polyvinyl alcohol and the defined water-soluble polyhydric alcohol is cast into a mold for a helmet followed by cooling to solidify the molded mass to form a hydrogel suited for the use as a helmet-shaped gel for cooling the head of a patient.

The shape of a helmet used for this purpose is somewhat different from the shapes of the helmets conventionally used for safety helmets at the job sites or used by batters in the baseball game, and the helmet suited for this scalp hypothermia should extend to cover not only the entire portion of the head on which hairs grow but also the side locks, i.e. hairs at left and right sides of the head, preferably to cover the portions of the face on which eyebrows grow. The helmet according to this invention for use in medical therapy may be easily produced by using a mold prepared by modifying the molds used for the production of helmets for the operators of motorcycles or the players of ice hockey game.

According to the process of the invention, a helmet-shaped mass of a hydrogel may be directly molded from the aqueous solution having the composition as defined in the appended claims and may be used without being wrapped or enclosed by a strip or a pouch made of, for example, polyvinyl chloride, polyethylene or polypropylene, to cover closely the overall area of the head of the patient with a moistented comfortable touch. Since the hydrogel prepared in accordance with the process of the invention is highly elastic and resilient, the inner periphery of the molded hydrogel readily takes the contour following to the shape and dimensions of the head of the patient to cover snugly the surface thereof. It should be clear that the hydrogel prepared through the process of this invention and having a KONNYAKU-like or pudding-like touch suited for directly and closely covering the head of the patient is superior to the conventional gels of jelly or paste form enclosed in a polyvinyl chloride or rubber pouch.

Since a polyvinyl alcohol having a relatively low polymerization degree may be used in the process of this invention, a hydrogel particularly high in elasticity and resiliency may be prepared and used to form a helmet having an extremely soft touch suited for covering the head of a patient who prefers such a soft touch. On the other hand, when a hydrogel which is harder to ensure more intimate contact with the head of a patient is desired, such a hydrogel may be prepared by selecting the concentration of polyvinyl alcohol to be within a higher concentration range of 15 to 25 wt%.

### Examples of the Invention

The present invention will now be described more specifically with reference to examples thereof.

### Example 1

An aqueous suspension composed of 210 g (Water Content: 7 wt%) of a polyvinyl alcohol having a degree of hydrolysis of 99.5 mol%, an average polymerization degree of 1,400 and a viscosity of a 4% aqueous solution thereof of 23 cP (at 20°C), 100 g of glycerin (Water Content: 8 wt%) and 1,390 g of water was prepared and sterilized by steam at 120°C for 35 minutes. The suspension was continuously stirred in a germ-free chamber to dissolve the polyvinyl alcohol and glycerin uniformly to prepare an aqueous solution containing 11 wt% of polyvinyl alcohol and 5 wt% of glycerin.

1,900 g of the aforementioned aqueous solution was cast into a stainless steel mold for molding a helmet having a depth of about 21 cm, an outer diameter of about 17 cm and a thickness of about 2 cm.

After being allowed to stand for cooling at −20°C for 9 hours, the cast mass was subjected to dehydration in vacuum to remove 220 g of water (Percent Dehydration Rate: 12 wt%), and then thawed by allowing to stand at the room temperature.

The thus prepared helmet was highly elastic and very soft, and had a sufficiently high mechanical strength enabling easy put-on and put-off operations of the helmet. The helmet was stored in a refrigerator to cool the same to 0°C, and put on the head of a child (8 years old) who was lying in the supine position. The temperature of the scalp reached 20 to 22°C after the lapse of 8 minutes, and the scalp was maintained at a temperature of 20 to 25°C over a period of 38 minutes after then.

### Example 2

An aqueous suspension composed of 440 g (Water Content: 7wt%) of a polyvinyl alcohol powder having a degree of hydrolysis of 99.1 mol%, an average polymerization degree of 1,100 and a viscosity at 20°C of a 4% aqueous solution of 15 cP, 100 g of glycerin and 1,458 g of water was prepared and sterilized by steam at 120°C for 35 minutes. The suspension was continuously stirred in a germ-free chamber to prepare an aqueous solution containing 20 wt% of polyvinyl alcohol and 5 wt% of glycerin, to which added were 100 mg (corresponding to 50 ppm) of p-hydroxybenzoic acid and 10 g (corresponding to 5,000 ppm) of a fradiomycin sulfate powder.

The thus prepared solution was cast into a stainless steel mold for molding a helment having a depth of about 23 cm, an outer diameter of about 20 cm and a thickness of about 2 cm. After being allowed to stand for cooling at −35°C for 9 hours, the cast mass was subjected to dehydration in vacuum to remove 210 g of water (Percent Dehydration Rate: 10 wt%), and then thawed by allowing to stand at the room temperature.

The thus prepared helmet was highly elastic and very soft, and had a sufficiently high mechanical strength enabling repeated put-on and put-off operations. The helmet was allowed to stand in an ice box of a refrigerator for an hour to reveal that the original elasticity and softness were retained without being frozen or stiffened. The helmet was then allowed to stand at the room temperature until the temperature of the helmet reached 0°C, whereupon it was put on the head of an adult who was lying in the horizontal supine position. The temperature of the scalp reached 21 to 23°C after the lapse of 9 minutes, and was maintained at 21 to 25°C over a period of subsequent 37 minutes.

### Example 3

An aqueous suspension composed of 430 g (Water Content: 7 wt%) of a polyvinyl alcohol having a degree of hydrolysis of 99.5 mol%, an average polymerization degree of 1,000 and a viscosity at 20°C of a 4% aqueous solution thereof of 11 cP, 175g of glycerin, 0.35 g of n-butyl p-hydroxybenzoate, 17.5 g of colistan sulfate and 2,800 g of water was prepared and sterilized by steam at 120°C for 25 minutes. The suspension was continuously stirred in a germ-free chamber to dissolve the components uniformly to prepare an aqueous solution containing 12 wt% of polyvinyl alcohol, 5 wt% of glycerin, 100 ppm of n-butyl p-hydroxybenzoate and 5,000 ppm of colistin sulfate. 3,400 g of the thus prepared aqueous solution was cast into a stainless steel mold for molding a helmet having a depth of about 26 cm, an outer diameter of about 22 cm and a thickness of about 2 cm. After being allowed to stand for cooling at −25°C for 8 hours, the cast mass was subjected to dehydration in vacuum to remove 325 g of water (Percent Dehydration Rate: 9.5 wt%), and then thawed by allowing to stand at the room temperature.

The thus prepared helmet was highly elastic and very soft, and had a sufficiently high mechanical strength enabling easy put-on and put-off operations. The helmet was allowed to stand in an ice box of a refrigerator for an hour to reveal that the original elasticity and softness were retained without being frozen or stiffened. The helmet was allowed to stand at the room temperature until the temperature thereof reached 0°C, whereupon it was put on the head of an adult who was lying in the supine position with his head raised. The scalp temperature reached 21 to 23°C after the lapse of 8 minutes, and was maintained at 21 to 25°C over a period of subsequent 38 minutes.

### Example 4

An aqueous suspension composed of 340 g (Water Content: 7 wt%) of a polyvinyl alcohol having a degree of hydrolysis of 99.5 mol%, an average polymerization degree of 1,100 and a viscosity at 20°C of a 4% aqueous solution thereof of 15 cP, 500 g of propylene glycol and 1,170 g of water was prepared and sterilized by steam at 120°C for 30 minutes, followed by stirring in a germ-free chamber to dissolve the polyvinyl alcohol and propylene glycol uniformly, whereby an aqueous solution containing 16 wt% of polyvinyl alcohol and 25 wt% of propylene glycol was obtained.

2 kg of the thus obtained aqueous solution was cast into a mold for molding a helmet. After being cooled at −45°C for 6 hours, the molded mass was subjected to dehydration in vacuum to remove 230 g of water (Percent Dehydration Rate: 12 wt%), and then allowed to stand at the room temperature to be thawed.

The thus prepared helmet was highly elastic and very soft, and had a sufficient strength enabling easy put-on and put-off operations. The helmet was placed in an ice storage container until the temperature thereof reached 0°C, whereupon it was put on the head of an adult who was lying in the supine position. The temperature of the head skin reached 20 to 22°C after the lapse of 9 minutes, and was maintained at 20 to 25°C over a period of subsequent 38 minutes.

### Example 5

An aqueous suspension was prepared by mixing 345 g (Water Content: 7 wt%) of a polyvinyl alcohol having a degree of hydrolysis of 99 mol%, an average polymerization degree of 1,200 and a viscosity at 20°C of a 4% aqueous solution thereof of 16 cP, 160 g of glycerin, 2,650 g of water and 16 g of paromomycin sulfate powder. After being sterilized by steam at 120°C for 25 minutes, the suspension was stirred in a germ-free chamber to dissolve the components uniformly to prepare an aqueous solution containing 10 wt% of polyvinyl alcohol, 5 wt% of glycerin and 5,000 ppm of paromomycin sulfate. 3.1 kg of the thus prepared solution was cast into a mold for molding a helmet having a depth of about 25 cm, an outer diameter of about 22 cm and a thickness of about 2 cm. After being cooled at −40°C for 6 hours, the cast mass was subjected to hydration in vacuum to remove 200 g of water (Percent Dehydration Rate: 6.5 wt%), and then thawed by allowing to stand at the room temperature.

The thus prepared helmet was highly elastic and very soft, and had a sufficient mechanical strength enabling easy put-on and put-off handling thereof. The original softeness and elasticity of the helmet were retained without being frozen or stiffened even after it was placed in an ice box of a refrigerator for an hour. The helmet was then allowed to stand at the room temperature until the temperature of the helmet reached 0°C, whereupon it was put on the head of an adult who was lying in the semi-prone position. The temperature of the scalp reached 21 to 23°C after the lapse of 9 minutes, and was maintained at 21 to 25°C over a period of subsequent 39 minutes.

### Example 6

Into 1,260 g of water dissolved was 200 g of a polyvinyl alcohol having a degree of hydrolysis of 99.5 mol%, an average polymerization degree of 1,300 and a viscosity at 20°C of a 4% aqueous solution thereof of 20 cP, and then added was 44 g of propylene glycol to prepare an aqueous solution containing 12 wt% of polyvinyl alcohol and 3 wt% of propylene glycol. The thus prepared aqueous solution was cast into a mold for molding a helmet, and then the molded mass was cooled at −20°C for 8 hours followed by dehydration in vacuum to remove 200 g of water (Percent Dehydration Rate: 13 wt%). The partially dehydrated mass was then allowed to stand at the room temperature to be thawed.

The thus prepared helmet was highly elastic and very soft, and had a sufficient mechanical strength enabling easy put-on and put-off operations.

The helmet was cooled to 0°C by placing it in an ice storage container, and then put on the head of an adult who was lying in the supine position. The temperature of the scalp reached 20 to 22°C after the lapse of 8 minutes, and was maintained at 20 to 25°C over a period of subsequent 33 minutes. The helmet had a compositon composed of 15 wt% of polyvinyl alcohol, 3 wt% of propylene glycol and 82 wt% of water.

### Comparative Example 1

1,900 g of the same aqueous solution of the polyvinyl alcohol and glycerin as used in Example 1 was cast into a mold for molding a helmet, and then cooled at −40°C for 24 hours. The cooled mass was allowed to stand at the room temperature without subjecting to partial dehydration in vacuum which should be essentially involved in the process of the invention.

The molded mass taken out of the mold was excessively soft that it could not be placed in position on a desk with an additional disadvantage that it was extremely sticky to give very uncomfortable touch when put on the head of a person against unpleasant feeling. The helmet was apt to slip out of the user's hands when it was handled to put it on or off the head, and it was found that the helmet was weak to be easily broken.

The rsults of this comparative example clearly show the advantageous effect of the partial dehydration step wherein a cooled mass of the hydrogel is dehydrated in vacuum according to the present invention.

### Claims

1. A process for the preparation of a hydrogel, comprising the steps of solidifying an aqueous solution containing 2.5 to 25 wt% of a polyvinyl alcohol having a degree of hydrolysis of not less than 95 mol% and an average polymerization degree of not less than 800 and less than 1500 and 1 to 80 wt% of a water-soluble polyhydric alcohol having 2 to 6 hydroxyl groups by cooling said aqueous solution to a temperature of not higher than − (minus) 3°C, and then dehydrating in vacuum the solidified mass until the percent dehydration rate reaches 5 to 95 wt%.

2. The process as claimed in claim 1, wherein said polyvinyl alcohol has a degree of hydrolysis of not less thn 97 mol%.

3. The process as claimed in claim 1 or 2, wherein the concentration of said polyvinyl alcohol is 15 to 25 wt%.

4. The process as claimed in any of the claims 1 to 3, wherein the concentration of said water-soluble polyhydric alcohol is 1 to 40 wt%.

5. The process as claimed in any of the claims 1 to 4, wherein said aqueous solution is maintained at a temperature of not lower than 50°C prior to the cooling and solidification step.

6. The process as claimed in any of the claims 1 to 5, wherein said polyhydric alcohol is selected from the group consisting of ethylene glycol, propylene glycol and glycerin.

7. The process as claimed in any one of the claims 1 to 6, wherein said dehydration in vacuum is effected at a reduced pressure of not higher than $2,66 \cdot 10^{-3}$ b (2 mmHg).

### Patentansprüche

1. Verfahren zur Herstellung eines Hydrogels, das folgende Verfahrensschritte umfaßt:
— Verfestigen einer wäßrigen Lösung, die
— 2,5 bis 25 Gew.-% eines Polyvinylalkohols mit einem Hydrolysegradnicht unter 95 Mol-% und einem durchschnittlichen Polymerisationsgrad nicht unter 800 und unter 1500 und
— 1 bis 80 Gew.-% eines wasserlöslichen Polyhydroxyalkohols mit 2 bis 6 Hydroxygruppen enthält, durch Abkühlen der wäßrigen Lösung auf eine Temperatur nicht über — (minus) 3°C, und
— anschließendes Entwässern der verfestigten Masse im Vakuum, bis das prozentuale Entwässerungsverhältnis 5 bis 95 Gew.-% erreicht.

2. Verfahren nach Anspruch 1, worin der Polyvinylalkohol einen Hydrolysegrad nicht unter 97 Mol-% aufweist.

3. Verfahren nach Anspruch 1 oder Anspruch 2, worin die Konzentration des Polyvinylalkohols 15 bis 25 Gew.-% beträgt.

4. Verfahren nach einem der Ansprüche 1 bis 3, worin die Konzentration des wasserlöslichen Polyhydroxyalkohols 1 bis 40 Gew.-% beträgt.

5. Verfahren nach einem der Ansprüche 1 bis 4, worin die wäßrige Lösung vor dem Schritt des Abkühlens und Verfestigens bei einer Temperatur nicht unter 50°C gehalten wird.

6. Verfahren nach einem der Ansprüche 1 bis 5, worin der Polyhydroxyalkohol ausgewählt ist unter Verbindungen der Gruppe Ethylenglykol, Propylenglykol und Glycerin.

7. Verfahren nach einem der Ansprüche 1 bis 6, worin die Entwässerung im Vakuum bei vermindertem Druck nicht über 2,66.10$^{-3}$ bar (2 mm Hg) durchgeführt wird.

**Revendications**

1. Procédé pour préparer un hydrogel, comprenant les étapes consistant à solidifier une solution aqueuse contenant 2,5 à 25% en poids d'un poly(alcool vinylique), ayant un degré d'hydrolyse non inférieur à 95 mol% et ayant un degré moyen de polymérisation non inférieur à 800 et inférieur à 1 500, et 1 à 80% en poids d'un polyalcool hydrosoluble comportant 2 à 6 groupes hydroxyles, par refroidissement de ladite solution aqueuse à une température non supérieure à — (moins) 3°C, puis à déshydrater sous vide la masse ainsi solifidiée, jusqu'à ce que le taux de déshydratation atteigne en pourcentage 5 à 95% en poids.

2. Procédé tel que revendiqué à la revendication 1, dans lequel ledit poly(alcool vinylique) a un degré d'hydrolyse non inférieur à 97 mol%.

3. Procédé tel que revendiqué à la revendication 1 ou 2, dans lequel la concentration dudit poly-(alcool vinylique) est de 15 à 25% en poids.

4. Procédé tel que revendiqué dans l'une quelconque des revendications 1 à 3, dans lequel la concentration dudit polyalcool hydrosoluble est de 1 à 40% en poids.

5. Procédé tel que revendiqué dans l'une quelconque des revendications 1 à 4, dans lequel ladite solution aqueuse est maintenu à une température non inférieure à 50°C avant l'étape de refroidissement et de solidification.

6. Procédé tel que revendiqué dans l'une quelconque des revendications 1 à 5, dans lequel ledit polyalcool est choisi dans l'ensemble constitué par l'éthylèneglycol, le propylèneglycol et le glycérol.

7. Procédé tel que revendiqué dans l'une quelconque des revendications 1 à 6, dans lequel ladite déshydration sous vide est réalisé sous une pression réduite non supérieure à 2,66.10$^{-3}$ bar (2 mmHg).